# EUROPEAN PATENT APPLICATION

(11) **EP 4 180 381 A1**
(43) Date of publication of application: **17.05.2023**
(21) Application number: 22164094.9
(22) Date of filing: 24.03.2022
(51) Int. Cl.: B67C 3/26

(54) **ANTI-DRIP SYSTEM FOR A FILLING NOZZLE WITH A MEMBRANE**

(30) Priority: 10.11.2021 ES 202131048
(71) Applicant: Decam Technology Solutions 2000, S.L., 26370 Navarrete, La Rioja (ES)
(72) Inventor: GONZALEZ SAN PEDRO, Alfredo, 26370 Navarrete (La Rioja) (ES)
(74) Representative: Ungria López, Javier

(57) **Abstract**

The invention relates to an anti-drip system for a nozzle with a membrane comprising a nozzle (10) with a head (12) and holes (11), a membrane (20) located on the head (12), a block (30) with an opening (34) for the injection of product from a dosing system, wherein the block (30) retains the membrane (20) against a closing plate (40) that incorporates a machining (41) that enables a space with the nozzle (10) for the expansion of the membrane (20) and a channel (42), which passes through the closing plate (40) through the machining (41) for the injection of air, wherein the head (12) of the nozzle (10), the machining (41) and a central portion of the membrane (20) have a domed shape, the membrane (20) being complemented by the head (12) of the nozzle (10) and the machining (41), such that dripping is avoided.

## Description

### OBJECT OF THE INVENTION

The present invention relates to an anti-drip system for a dosing machine, of the kind used to enable the passage of a liquid or pasty product to a container, which incorporates a nozzle with a membrane.

The purpose of the invention is to ensure a correct dosage of the amount of product, limited by the dosing device on the container, preventing undesirable drips and splashes and performing it in the shortest time possible, in addition to reducing the wear of the membranes.

### BACKGROUND OF THE INVENTION AND TECHNICAL PROBLEM TO SOLVE

There are currently different anti-drip systems on the market for dosing machines for liquid or pasty products. All of them are based on closing the conduit through which the product to be dosed circulates to the container and opening it under a controlled signal to allow a quantity of product determined by the dosing equipment to pass through.

These existing anti-drip systems are placed between the dosing system, which determines the amount of product, and the container on which the product is poured.

Existing systems can be of different types, although the most common are bolt systems, wherein a piston mechanically closes the conduit, and membrane systems, wherein a membrane closes the product passage conduit(s) to the container.

Bolt systems present problems in cleaning the internal rod and are not suitable for low-viscosity products, as they present dripping problems that increase with the wear of the elements.

Membrane systems present problems by generating splashes and/or drips in the containers when the opening and closing of the conduit towards the container occurs.

When working with sticky products, the membrane can adhere to the surface of the nozzle when the closing occurs. When the product is pushed towards the nozzle, the membrane does not open, causing an overpressure that opens the membrane abruptly, generating splashes on the container.

Another problem is due to the distance between the membrane at rest and the upper face of the nozzle which, as it is raised, requires the membrane to stretch greatly in order to perform the closure. This causes an incomplete closure of the conduits placed in the outermost portion of the head of the nozzle as well as increasing the wear of the membrane itself.

The present invention solves problems of this type, preventing undesired drips and splashes, also providing two additional advantages, such as the fact that the dosage is carried out in the shortest time possible and the wear of the membranes is reduced.

### DESCRIPTION OF THE INVENTION

In order to achieve the objectives and avoid the above-mentioned drawbacks, the present invention describes an anti-drip system for a nozzle with a membrane for a dosing machine for liquid or viscous products.

The objectives of the system of the invention are the following:
- Reduce splashes on a container located under the nozzle.
- Eliminate dripping of product on the container once the membrane is closed.
- Reduce the pouring time of the dosed product onto the container.
- Extend the life of the membrane.

To achieve these objectives, the anti-drip system comprises a nozzle with a head that incorporates holes, a membrane located on the head, a block with a fastening to fasten the nozzle, an opening for the connection of an inlet conduit of product from a dosing system, a retention means for retaining the membrane against a closing plate that incorporates a machining that enables a space with the nozzle for the expansion of the membrane and a channel, which passes through the support plate by the machining, and an activator bushing, connected to a pneumatic system, with a cannula inserted into the channel.

The novelty of the anti-drip system consists of modifications made to the components to ensure that the movement of the membrane to be adjusted or removed from the nozzle is minimal and uniform for the entire membrane, without abruptness.

To do so, the head of the nozzle has a domed configuration, while the membrane comprises a dome-shaped central portion complementary to the head of the nozzle. In addition, the machining of the top plate is domed.

This configuration achieves that, when the dosing system is activated, the product presses on the membrane, which stretches minimally and uniformly until it contacts the machining, and that, once the product dosing is finished, the pneumatic system blows air through the cannula, pushing the membrane against the head and blocking the holes.

### BRIEF DESCRIPTION OF THE FIGURES

To complete the description of the invention, and for the purpose of helping to make the features thereof more readily understandable, according to a preferred exemplary embodiment thereof, a set of drawings is included wherein, by way of illustration and not limitation, the following figures have been represented:
- Figure 1 represents a cross-sectional view of the anti-drip system of the invention at rest.
- Figure 2 represents a cross-sectional view of the anti-drip system of the invention in operation.

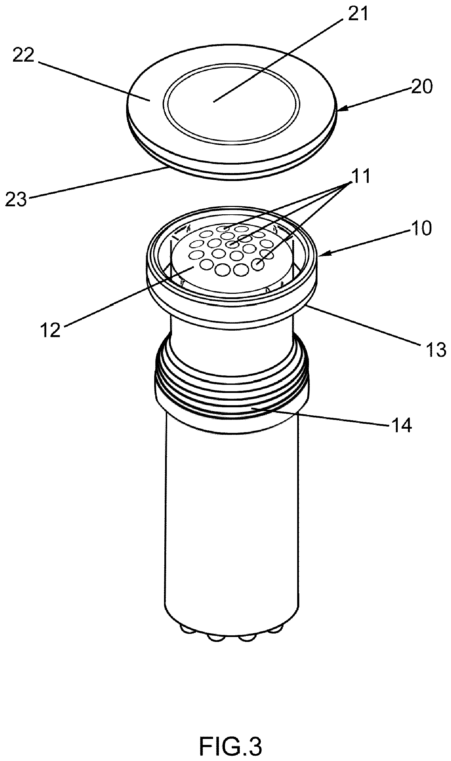

- Figure 3 represents an exploded perspective view of the membrane and the nozzle

A list of the references used in the figures is provided below:
10. Nozzle.
11. Holes.
12. Head.
13. Protrusion.
14. Recess.
20. Membrane.
21. Dome.
22. Flat ring.
23. Projection.
30. Block.
31. Groove.
32. Internal wall.
34. Opening.
40. Closing plate.
41. Machining.
42. Channel.
50. Activator bushing.
51. Cannula.
60. Support plate

### DESCRIPTION OF A PREFERRED EMBODIMENT OF THE INVENTION

The present invention relates to an anti-drip system for product dosing equipment for a nozzle (10) with a membrane (20).

As shown in the figures, the system of the invention comprises the following elements:
- a nozzle (10),
- a membrane (20),
- a block (30),
- a closing plate (40),
- an activator bushing (50), and
- a support plate (60).

The configuration of the different elements is described below.

The nozzle (10) has a cylindrical shape with a plurality of holes (11) passing through it longitudinally. In any case, it can also be single tube if the product to be dosed is very viscous.

The nozzle has a dome-shaped head (12), a protrusion (13) to secure the membrane (2) and a recess (14) to seat an O-ring and ensure closure with the block (30).

The membrane (20) comprises a flat ring (22) that has a peripheral projection (23) in the outermost area to ensure the securing thereof and a dome (21), in the interior area in the opposite direction to the projection (23).

The block (30) has a hollow cylindrical shape and comprises an internal wall (32), an opening (34) intended to accommodate an inlet conduit of product that is injected from a dispensing device. It also comprises a groove (31) in the upper base, intended to house the projection (23) of the membrane (20).

The closing plate (40) comprises a lower dome-shaped machining (41), and a channel (42) for the passage of the activator bushing (50).

The activator bushing (50) is connected to pneumatic equipment and comprises a cannula (51) for the outlet of air located in the channel (42) of the closing plate (40).

The support plate (60) is responsible for giving dimensional stability to the assembly, such that both the block (30) and the nozzle (10) sit on it.

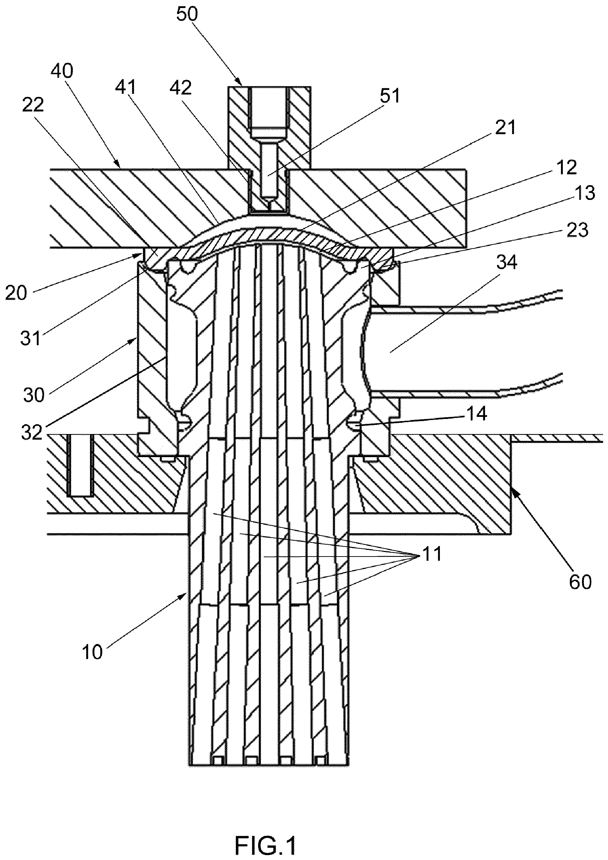

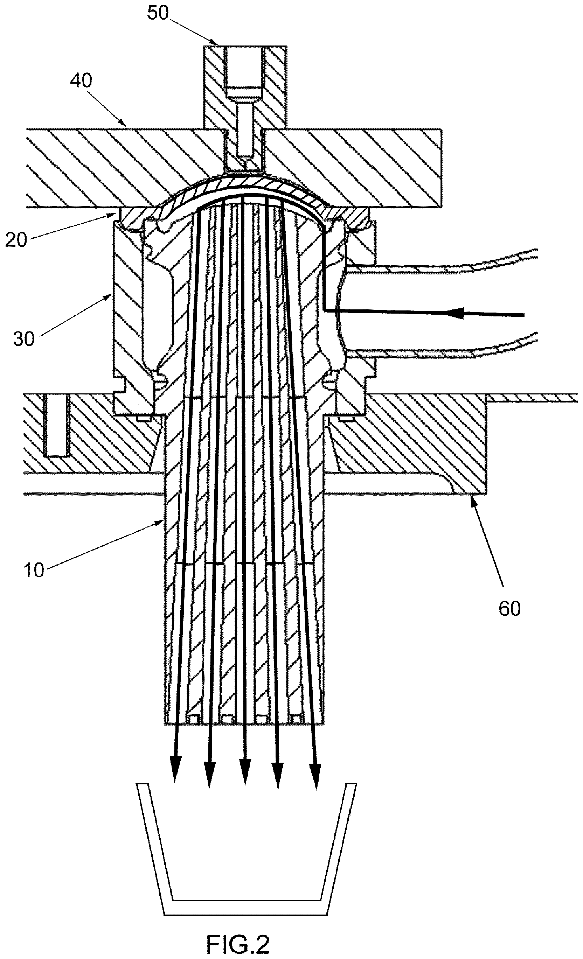

Figures 1 and 2 show the system of the invention assembled to the support plate (60).

The projection (23) of the membrane (20) is intended to sit in the groove (31) of the block (30), such that a sealed joint can be achieved. In addition, the protrusion (13) of the nozzle (10) presses the flat ring (22) of the nozzle (10) against the closing plate (40) to reinforce the seal. To increase the effect of this sealing, the membrane (20) is made of an elastic material that also facilitates the extension movement to release the holes (11) for the transit of product.

The opening (34) of the block (30) is intended to receive in a sealed manner an inlet conduit through which product is supplied from a dosing system.

The activator bushing (50) for its part is coupled to the closing plate (40) with the cannula (51) inserted in the channel (42).

In figure 1 the membrane (20) is in contact with the head (12) of the nozzle (10), creating a sealed space with the machining (41) of the closing plate (40).

In figure 2, the dosing system is in operation and has injected product through the inlet conduit, which accesses the block (30) through the opening (34) to flow through the gap enabled between the internal wall (32) of the block (30) and the nozzle (10) and be introduced through the holes (11) pushing the membrane (20) and separating it from the head (12) of the nozzle (10) until the dome (21) of the membrane (20) contacts the machining (41) of the closing plate (40) which is in the extended position. This is facilitated by the elasticity provided to the membrane (20) by the elastic material from which it is made. The movement of the membrane (20) to change from the resting position to being coupled in the machining (41) is minimal and uniform at all points of the membrane (20), maintaining a constant space for the passage of the product.

To enable the passage of the product, the pneumatic system must be deactivated, enabling the outlet of the air located between the machining (41) of the closing plate (40) and the dome (21) of the membrane (20).

Thus, the product enters the block (30) through the inlet conduit to flow through the gap enabled between the internal wall (32) of the block (30) and the nozzle (10) and move towards the holes (11) to exit through the other end towards a container enabled to be filled.

Once the determined amount of product has been injected, the product injection is cut off and the pneumatic system is activated, creating pressure on the membrane (20) which not only helps it to return to the resting position on the head (12), but pushes it to plug the access to the holes (11).

When product is injected again through the inlet conduit, it will once again access the holes (11), pushing the membrane (20) against the machining (41) of the closing plate (40).

This domed configuration of the membrane (20) and the head (12) means that, even in the case of very sticky products causing the membrane (20) to adhere to the head (12), the pressure exerted by the product to separate the membrane (20) of the head (12) is carried out smoothly and continuously, without jolts, which prevents the product from pushing on the membrane (20) and splashes, making the opening immediate.

Furthermore, as the machining (41) also has a domed configuration, it causes the displacement of the membrane (20) to be minimal, performing a complete closure almost immediately and similarly for all points when stretched. In addition, by reducing the displacement of the membrane (20), the stretching caused is also reduced, extending the life of the membrane (20).

Lastly, it must be taken into account that the present invention must not be limited by the embodiment described herein. Other configurations may be carried out by those skilled in the art based on the present description. Accordingly, the scope of the invention is defined by the following claims.

## Claims

1. An anti-drip system for a nozzle with a membrane comprising a nozzle (10) with a head (12) that incorporates holes (11), a membrane (20) located on the head (12), a block (30) with a fastening to fasten the nozzle (10), an opening (34) for the connection of an inlet conduit of product from a dosing system, wherein the block (30) retains the membrane (20) against a closing plate (40) that incorporates a machining (41) with a domed shape that enables a space with the nozzle (10) for the expansion of the membrane (20) and a channel (42), which passes through the closing plate (40) through the machining (41), for the insertion of a cannula (51) of an activator bushing (50) that is connected to a pneumatic system, the anti-drip system being **characterised in that**:
- the head (12) of the nozzle (10) has a domed configuration, and
- the membrane (20) has a dome-shaped central portion complementary to the head (12) of the nozzle (10) and the machining (41),
wherein:
- when the dosing system is activated, the product presses on the membrane (20) until it contacts the machining (41), and
- once the dosing of the product is finished, the pneumatic system injects air through the cannula (51) pushing the membrane (20) against the head (12) and blocking the holes (11),
such that the membrane (20) is stretched uniformly.

## Amended claims

### Amended claims in accordance with Rule 137(2) EPC.

1. An anti-drip system for a nozzle with a membrane comprising a nozzle (10) with a head (12) that incorporates holes (11), a membrane (20) located on the head (12), a block (30) with a fastening to fasten the nozzle (10), an opening (34) for the connection of an inlet conduit of product from a dosing system, wherein the block (30) retains the membrane (20) against a closing plate (40) that incorporates a machining (41) with a domed shape that enables a space with the nozzle (10) for the expansion of the membrane (20) and a channel (42), which passes through the closing plate (40) through the machining (41), for the insertion of a cannula (51) of an activator bushing (50) that is connected to a pneumatic system, the anti-drip system being **characterised in that**:
- the head (12) of the nozzle (10) has a domed configuration, and
- the membrane (20) has a dome-shaped central portion complementary to the head (12) of the nozzle (10) and the machining (41),
wherein:
- when the dosing system is activated, the product is injected through the inlet conduit, which accesses the block (30) through the opening (34) to flow through the gap enabled between the internal wall (32) of the block (30) and the nozzle (10) and be introduced through the holes (11), pressing on the membrane (20) until it contacts the machining (41), and
- once the dosing of the product is finished, the product injection is cut off and the pneumatic system injects air through the cannula (51) pushing the membrane (20) against the head (12) and blocking the holes (11),
such that the membrane (20) is stretched uniformly.
